# EUROPÄISCHE PATENTSCHRIFT

(11) **EP 0 342 313 B1**
(45) Veröffentlichungstag und Bekanntmachung des Hinweises auf die Patenterteilung: **21.09.1994**
(21) Anmeldenummer: 89102290.7
(22) Anmeldetag: 10.02.1989
(51) Int. Cl.: C21D 1/00, C21D 1/18

(54) **Verfahren und Vorrichtung zur kontrollierten Beeinflussung des Innen-und/oder Aussendurchmessers beim Abkühlvorgang von zu härtenden Werkstücken**
Method and device for controlling the inner and/or outer diameter of articles when they harden during their cooling stage
Procédé et dispositif pour contrôler le diamètre intérieur et/ou extérieur d'objets à durcir pendant leur refroidissement

(30) Priorität: 19.05.1988 DE 3817019
(43) Veröffentlichungstag der Anmeldung: 23.11.1989
(73) Patentinhaber: KARL HEESS GMBH & CO. MASCHINENBAU, D-68623 Lampertheim (DE)
(72) Erfinder: Heess, Karl, D-6840 Lampertheim 5 (DE); Schweikert, Karl-Heinz, D-6842 Bürstadt (DE)
(74) Vertreter: Ratzel, Gerhard, Dr.

(56) Entgegenhaltungen:
- DE-A- 1 914 714
- DE-C- 3 406 167
- GB-A- 2 054 857
- US-A- 2 508 826
- US-A- 2 686 369
- US-A- 4 696 711
- PATENT ABSTRACTS OF JAPAN vol. 7, no. 145 (M-224)(1290) 24. Juni 1983; & JP-A-58 057915 (Nippon Seiko) 6 April 1983

## Beschreibung

Die Erfindung betrifft ein Verfahren und eine Vorrichtung zur kontrollierten Beeinflussung des Innen- und/oder Außendurchmessers beim Abkühlvorgang von zu härtenden metallischen Werkstücken.

Werkstücke bedürfen einer Härtung, wenn eine Steigerung der Härte und Festigkeit erzielt werden soll.

Der Härtevorgang erfolgt in bekannter, herkömmlicher Weise.

Nach der Erwärmung neigt das Werkstück beim Abkühlvorgang zum Schrumpfen.

Zwar kann der Ausdehnungs- und Schrumpfkoeffizient in etwa berechnet werden, jedoch sind die auftretenden Toleranzen so groß, daß die Werkstücke bei den herkömmlichen Vorrichtungen gegebenenfalls nachbearbeitet werden müssen.

Insbesondere dann, wenn in dem zu härtenden Werkstück Bohrungen eingelassen sind, um z.B. mit einem entsprechenden Element eine exakte mechanische Verbindung aufzunehmen.

Desweiteren kann es erforderlich sein, den Innen- und/oder Außendurchmesser eines Werkstückes maßgenau zu halten.

Bei bekannten Vorrichtungen ist eine ausreichende Rundheit der Bohrungen, insbesondere bei dünnwandigen Werkstücken nicht gewährleistet. Dadurch werden Nacharbeitungen am Werkstück erforderlich, die zu erhöhten Kosten bei der Produktion führen.

Eine kontrollierte Beeinflussung der Zentrizität ist mit den bekannten Vorrichtungen nicht möglich.

Der Erfindung liegt daher die Aufgabe zugrunde, ein Verfahren und eine Vorrichtung bereitzustellen, die es ermöglichen, den Schrumpfungsvorgang eines gehärteten und abzuschrekkenden Werkstücks kontrolliert zu beeinflussen.

Diese Aufgabe wird erfindungsgemäß dadurch gelöst, daß das Verfahren zur kontrollierten Beeinflussung des Innen- und/oder Außendurchmessers beim Abkühlvorgang von zu härtenden metallischen Werkstücken dadurch gekennzeichnet ist, daß mindestens ein senkrecht verfahrbarer, an seinem Außenumfang und/oder Innendurchmesser konisch ausgebildeter Kolben in den Innen-und/oder Außendurchmesser eines Werkstücks einfährt bzw. diesen umfaßt und hierbei eine kontrollierte Beeinflussung des Maßverhaltens und der Zentrizität des zu härtenden Werkstückes bewirkt.

Ferner besteht die Erfindung in einer Vorrichtung zur Durchführung des Verfahrens, die dadurch gekennzeichnet ist, daß sie mindestens einen, mit einer einstellbaren Druckkraft beaufschlagten, senkrecht verfahrbaren Kolben, der im Außenumfang und/oder im Innendurchmesser konisch ausgebildet ist, eine obere Matritze und eine untere Matritze umfaßt.
Bevorzugte Ausführungsformen können vorsehen,
daß jedem Kolben eine Fahrwegbegrenzungseinrichtung zugeordnet ist,
daß der Kolben im Außenumfang konisch ausgebildet ist,
daß der Kolben im Innendurchmesser konisch ausgebildet ist, bzw.
daß die Kolben zum Ineinandergreifen zweier axial benachbarter Kolben Einschnitte aufweisen.

Die Erfindung wird anhand der beigefügten Zeichnungen, die ein besonders bevorzugtes Ausführungsbeispiel der Erfindung zeigen, näher erläutert. Dabei zeigt:
- Figur 1: einen Querschnitt durch die erfindungsgemäße Vorrichtung bei Einsatz eines Kolbens in einem kontrolliert zu beeinflussenden Innendurchmesser eines Werkstückes.
- Figur 1a: das in Figur 1 mit A gekennzeichnete Detail
- Figur 2: die erfindungsgemäße Vorrichtung mit Einsatz eines Kolbens zur kontrollierten Beeinflussung eines Außendurchmessers eines Werkstückes.
- Figur 2a: das in Figur 2 mit A gekennzeichnete Detail
- Figur 3: einen Querschnitt durch die erfindungsgemäße Vorrichtung unter dem Einsatz zweier axial benachbarter Kolben.
- Figur 4: eine Ansicht eines Kolbens, der zum Einsatz zweier axial benachbarter Kolben dient, aus der in Figur 3 angedeuteten Richtung A'.

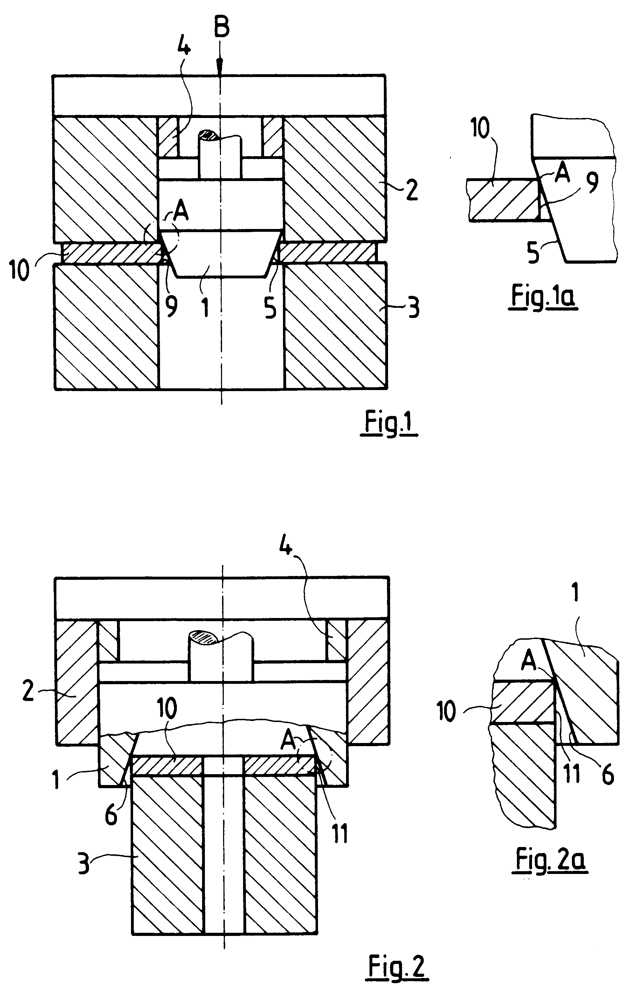

Figur 1 zeigt ein Ausführungsbeispiel der erfindungsgemäßen Vorrichtung.

Hierbei ist beim Abkühlvorgang die Schrumpfung des Innendurchmessers 9 eines Werkstückes 10 kontrolliert zu beeinflussen.

Das Werkstück 10 befindet sich zwischen zwei Matrizen 2 und 3, die das Werkstück 10 positionieren.

Beim Abkühlvorgang neigt das Werkstück 10 zum Schrumpfen. Der senkrecht verfahrbare Kolben 1 liegt mit seinem Außenumfang 5 theoretisch an den Punkten A am innendurchmesser 9 des Werkstückes 10 an. Durch Beaufschlagung einer Druckkraft B, die entweder direkt auf den Kolben 1 wirken kann oder über die senkrecht verfahrbaren Fahrwegsbegrenzungseinrichtungen 4, die hier als Anschläge ausgebildet sind, auf den Kolben 1 wirken, wird die kontrollierte Beeinflussung der Schrumpfung des Innendurchmessers 9 ermöglicht.

Figur 2 zeigt ein weiteres Ausführungsbeispiel der Erfindung, bei dem die Schrumpfung des Außendurchmessers 11 eines werkstückes 10 kontrolliert zu beeinflussen ist.

Der Kolben 1 weist hierbei eine konische Innenfläche 6 auf. Der kontrollierbare Beeinflussungsvorgang verhält sich analog zu dem, wie er bereits in Figur 1 beschrieben wurde.

Es ist eine weiterer Erfindungsgedanke der vorliegenden Vorrichtung, die konstruktive Gestalt der Ausführungsbeispiele in Figur 1 und 2 zu kombinieren, so daß gleichzeitig ein Kolben zur kontrollierten Beeinflussung des Außendurchmessers und ein Kolben zur kontrollierten Beeinflussung des Innendurchmessers eines Werkstückes eingesetzt sind.

Auch ist der Einsatz mehrerer Kolben zur kontrollierten Beeinflussung von mehreren Innen- und/oder Außendurchmessern eines Werkstückes vorgesehen.

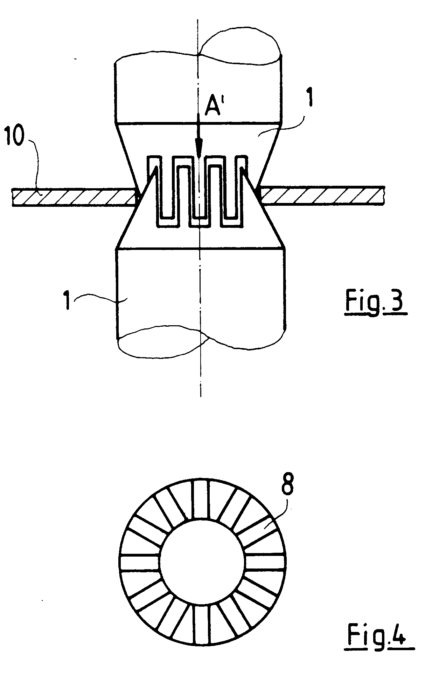

Figur 3 zeigt ein Ausführungsbeispiel der Erfindung, in dem zwei axial benachbarte Kolben 1 eingesetzt werden.

Hierbei ist es erforderlich, die Kolben 1, wie in Figur 4 dargestellt, mit Einschnitten 8 zu versehen, so daß beide Kolben ineinander eingreifen können.

Die auf die Kolben 1 bzw. Fahrwegsbegrenzungseinrichtungen 4 wirkende Druckkraft kann z.B. hydraulisch oder pneumatisch aufgebracht werden.

Gegebenenfalls kann die Steuerung der Druckkraft rechnerisch den Gegebenheiten angepaßt und ermittelt werden.

Die Fahrwegsbegrenzungseinrichtungen 4 dienen grundsätzlich einer maximalen Begrenzung des Fahrweges des Kolbens 1 und können kontruktiv verschiedener Gestalt sein, wie z.B. kreisringförmig, plattenförmig, oder in Form einer Stellschraube zum Einsatz kommen.

Die vorliegende Erfindung ermöglichtes, die Schrumpfung von zu härtenden und abzukühlenden Werkstoffen hinsichtlich der Maßtoleranz und der Zentrität von Außen- und Innendurchmessern kontrolliert zu beeinflussen und erübrigt somit kostspielige Nachbearbeitungen der Werkstücke.

## Patentansprüche

1. Verfahren zur kontrollierten Beeinflussung des Innen-und/oder Außendurchmessers beim Abkühlvorgang von zu härtenden metallischen Werkstücken,
dadurch gekennzeichnet,
daß mindestens ein senkrecht verfahrbarer, an seinem Außenumfang (5) und/oder Innendurchmesser (6) konisch ausgebildeter Kolben (1) in den Innen- und/oder Außendurchmesser eines Werkstückes (10) einfährt bzw. dieses umfaßt und hierbei eine kontrollierte Beeinflussung des Maßverhaltens und der Zentrizität des zu härtenden Werkstückes (10) bewirkt.

2. Vorrichtung zur Durchführung des Verfahrens nach Anspruch 1,
dadurch gekennzeichnet,
daß die Vorrichtung mindestens einen, mit einer einstellbaren Druckkraft beaufschlagten, senkrecht verfahrbaren Kolben (1), der im Außenumfang und/oder im Innendurchmesser konisch ausgebildet ist, eine obere Matritze (2) und eine untere Matritze 3, umfaßt.

3. Vorrichtung zur Durchführung des Verfahrens nach Anspruch 1-2,
dadurch gekennzeichnet,
daß jedem Kolben (1) eine Fahrwegbegrenzungseinrichtung (4) zugeordnet ist.

4. Vorrichtung zur Durchführung des Verfahrens nach Anspruch 1-3,
dadurch gekennzeichnet,
daß der Kolben (1) im Außenumfang (5) konisch ausgebildet ist.

5. Vorrichtung zur Durchführung des Verfahrens nach Anspruch 1-4,
dadurch gekennzeichnet,
daß der Kolben (1) im Innendurchmesser (6) konisch ausgebildet ist.

6. Vorrichtung zur Durchführung des Verfahrens nach Anspruch 1-5,
dadurch gekennzeichnet,
daß die Kolben (1) zum Ineinandergreifen zweier axial benachbarter Kolben Einschnitte (8) aufweisen.

## Claims

1. A method for the controlled influencing of the inner and/or outer diameter during the cooling process of metal workpieces to be hardened, characterised in that at least one vertically movable piston (1), which is conically shaped on its outer periphery (5) and/or inner diameter (6), respectively moves into the inner diameter and/or encloses the outer diameter of a workpiece (10), whereupon a controlled influencing of the dimensional behaviour and centricity of the workpiece (10) to be hardened is carried out.

2. An apparatus for carrying out the method according to Claim 1, characterised in that the apparatus comprises at least one vertically movable piston (1), which is acted upon by an adjustable pressure and which is conically shaped on its outer periphery and/or in its inner diameter, and an upper die (2) and a lower die (3).

3. An apparatus for carrying out the method according to Claims 1 to 2, characterised in that a travel-limiting means (4) is associated with each piston (1).

4. An apparatus for carrying out the method according to Claims 1 to 3, characterised in that the piston (1) is conically shaped on its outer periphery (5).

5. An apparatus for carrying out the method according to Claims 1 to 4, characterised in that the piston (1) is conically shaped in its inner diameter (6).

6. An apparatus for carrying out the method according to Claims 1 to 5, characterised in that the pistons (1) have slots (8) for the interengagement of two axially adjacent pistons.

## Revendications

1. Procédé pour exercer une action contrôlée sur le diamètre intérieur et/ou le diamètre extérieur lors du processus de refroidissement de pièces métalliques soumises à une trempe, **caractérisé** en ce qu'au moins un piston (1) verticalement déplaçable, réalisé conique sur sa circonférence extérieure (5) et/ou sur son diamètre intérieur (6), rentre dans le diamètre intérieur d'une pièce (10) ou, selon le cas, embrasse le diamètre extérieur d'une pièce (10), et exerce alors une action contrôlée sur le comportement dimensionnel et la centricité de la pièce trempée (10).

2. Dispositif pour la mise en oeuvre du procédé selon la revendication 1**, caractérisé** en ce que le dispositif comprend au moins un piston (1), verticalement déplaçable en étant sollicité par une force de pression réglable et réalisé conique sur sa circonférence extérieure et/ou sur son diamètre intérieur, ainsi qu'une matrice supérieure (2) et une matrice inférieure (3).

3. Dispositif pour la mise en oeuvre du procédé selon la revendication 1 ou 2, **caractérisé** en ce qu'un moyen limiteur de course de déplacement (4) est associé à chaque piston (1).

4. Dispositif pour la mise en oeuvre du procédé selon l'une quelconque des revendications 1 à 3, **caractérisé** en ce que le piston (1) est réalisé conique sur sa circonférence extérieure (5).

5. Dispositif pour la mise en oeuvre du procédé selon l'une quelconque des revendications 1 à 4, **caractérisé** en ce que le piston (1) est réalisé conique sur son diamètre intérieur (6).

6. Dispositif pour la mise en oeuvre du procédé selon l'une quelconque des revendications 1 à 5, **caractérisé** en ce que les pistons (1) présentent des entailles (8) en vue de l'engagement l'un dans l'autre de deux pistons axialement voisins.
